# DEMANDE DE BREVET EUROPEEN

(11) **EP 3 756 750 A1**
(43) Date de publication de la demande: **30.12.2020**
(21) Numéro de dépôt: 20180276.6
(22) Date de dépôt: 16.06.2020
(51) Int. Cl.: B01D 53/22, C10L 3/10

(54) **INSTALLATION POUR LE TRAITEMENT D'UN FLUX DE MÉTHANE ET DE DIOXYDE DE CARBONE AU MOYEN D'UN COMPRESSEUR À PALETTES ET D'UNE UNITÉ DE SÉPARATION PAR MEMBRANE**

(30) Priorité: 26.06.2019 FR 1906949
(71) Demandeur: L'AIR LIQUIDE, SOCIETE ANONYME POUR L'ETUDE ET L'EXPLOITATION DES PROCEDES GEORGES CLAUDE, 75007 Paris (FR)
(72) Inventeur: BARRAUD, François, 38360 Sassenage (FR)
(74) Mandataire: Air Liquide

(57) **Abrégé**

Installation pour le traitement d'un flux gazeux d'alimentation comprenant au moins du méthane et du dioxyde de carbone, ladite installation comprenant:
- un compresseur à palettes lubrifiées par huile ou par eau permettant de comprimer le flux gazeux d'alimentation, et
- une unité de séparation par membrane apte à recevoir le flux gazeux comprimé et à séparer le méthane du dioxyde de carbone.

## Description

La présente invention est relative à une installation de traitement par perméation membranaire d'un flux gazeux d'alimentation contenant au moins du méthane et du dioxyde de carbone pour produire un courant gazeux riche en méthane - dont la teneur en méthane est conforme aux besoins de son utilisation et à un procédé de traitement d'un tel flux gazeux d'alimentation mettant en œuvre ladite installation.

Elle concerne en particulier la compression du biogaz dans le but de produire du biométhane conforme aux spécifications pour injection dans un réseau de gaz naturel. Le biogaz est le gaz produit lors de la dégradation de matières organiques en l'absence d'oxygène (fermentation anaérobie) encore appelée méthanisation. Il peut s'agir d'une dégradation naturelle - on l'observe ainsi dans les marais ou les décharges d'ordures ménagères - mais la production de biogaz peut aussi résulter de la méthanisation de déchets dans un réacteur dédié, appelé méthaniseur ou digesteur.
De par ses constituants principaux - méthane et dioxyde de carbone - le biogaz est un puissant gaz à effet de serre ; il constitue aussi, parallèlement, une source d'énergie renouvelable appréciable dans un contexte de raréfaction des énergies fossiles. Le biogaz contient majoritairement du méthane (CH4) et du dioxyde de carbone (CO2) dans des proportions variables en fonction du mode d'obtention mais également, en moindres proportions de l'eau, de l'azote, de l'hydrogène sulfuré, de l'oxygène, ainsi que des composés organiques autres, à l'état de traces.
Selon les matières organiques dégradées et les techniques utilisées, les proportions des composants diffèrent, mais en moyenne le biogaz comporte, sur gaz sec, de 30 à 75% de méthane, de 15 à 60% de CO2, de 0 à 15% d'azote, de 0 à 5% d'oxygène et des composés traces.

Le biogaz est valorisé de différentes manières. Il peut, après un traitement léger, être valorisé à proximité du site de production pour fournir de la chaleur, de l'électricité ou un mélange des deux (la cogénération); la teneur importante en dioxyde de carbone réduit son pouvoir calorifique, augmente les coûts de compression et de transport et limite l'intérêt économique de sa valorisation à cette utilisation de proximité.
Une purification plus poussée du biogaz permet sa plus large utilisation, en particulier, une purification poussée du biogaz permet d'obtenir un biogaz épuré aux spécifications du gaz naturel et qui pourra lui être substitué ; le biogaz ainsi purifié est le « biométhane ». Le biométhane complète ainsi les ressources de gaz naturel avec une partie renouvelable produite au coeur des territoires; il est utilisable pour exactement les mêmes usages que le gaz naturel d'origine fossile. Il peut alimenter un réseau de gaz naturel, une station de remplissage pour véhicules, il peut aussi être liquéfié pour être stocké sous forme de gaz naturel liquide (GNL).

Les modes de valorisation du biométhane sont déterminés en fonction des contextes locaux : besoins énergétiques locaux, possibilités de valorisation en tant que biométhane carburant, existence à proximité de réseaux de distribution ou de transport de gaz naturel notamment. Créant des synergies entre les différents acteurs oeuvrant sur un territoire (agriculteurs, industriels, pouvoirs publics), la production de biométhane aide les territoires à acquérir une plus grande autonomie énergétique.

Plusieurs étapes doivent être franchies entre la collecte du biogaz et l'obtention du biométhane, produit final apte à être comprimé ou liquéfié.
En particulier, plusieurs étapes sont nécessaires avant le traitement qui vise à séparer le dioxyde de carbone pour produire un courant de méthane purifié.
Une première étape consiste à comprimer le biogaz qui a été produit et acheminé à pression atmosphérique, la présente invention concerne la technologie pour effectuer cette étape. Les étapes suivantes visent à débarrasser le biogaz des composants corrosifs que sont le sulfure d'hydrogène et les composés organiques volatils (COV), les technologies utilisées sont de façon classique l'adsorption à pression modulée (PSA) et le piégeage sur charbon actif. Vient ensuite l'étape qui consiste à séparer le dioxyde de carbone pour disposer in fine de méthane à la pureté requise pour son usage ultérieur.

Le dioxyde de carbone est un contaminant typiquement présent dans le gaz naturel dont il est courant de devoir le débarrasser. Des technologies variées sont utilisées pour cela en fonction des situations ; parmi celles-ci, la technologie membranaire est particulièrement performante lorsque la teneur en CO2 est élevée ; elle est donc particulièrement performante pour séparer le CO2 présent dans le biogaz, et en particulier dans le gaz de décharge. Les procédés membranaires de séparation de gaz utilisés pour la purification d'un gaz, qu'ils utilisent un ou plusieurs étages de membranes doivent permettre la production d'un gaz à la qualité requise, pour un faible coût, tout en minimisant les pertes du gaz que l'on souhaite valoriser. Ainsi, dans le cas de l'épuration du biogaz, la séparation effectuée est principalement une séparation CH4/CO2, devant permettre la production d'un gaz contenant en fonction de son utilisation plus de 85% de CH4, de préférence plus de 95% de CO2, plus préférentiellement plus de 97,5% de CH4, tout en minimisant les pertes de CH4 dans le gaz résiduaire et le coût d'épuration, ce dernier étant pour une part importante lié à la consommation électrique du dispositif de compression du gaz en amont des membranes. Ainsi la présente invention est une installation pour le traitement d'un flux gazeux d'alimentation comprenant au moins du méthane et du dioxyde de carbone, ladite installation comprenant:
- un compresseur à palettes lubrifiées par huile ou par eau permettant de comprimer le flux gazeux d'alimentation, et
- une unité de séparation par membrane apte à recevoir le flux gazeux comprimé et à séparer le méthane du dioxyde de carbone.
Le compresseur à palettes aspire le flux gazeux par une ouverture d'admission et le dirige vers un carter qui voit son volume se réduire par la rotation des aubes et ainsi augmente la pression de ce flux gazeux.
Une lubrification particulièrement précise est d'une importance vitale pour le fonctionnement des compresseurs à palettes, non seulement pour les paliers du rotor, mais également à l'intérieur du carter afin de limiter les frottements entre les aubes et le carter lui-même, afin d'assurer à la fois l'étanchéité et la protection.
Pour cette lubrification on utilise de l'huile ou de l'eau.
Selon le cas l'installation selon l'invention peut présenter une ou plusieurs des caractéristiques suivantes :
- elle comprend au moins un moyen de mesure de la pression du flux gazeux d'alimentation à l'entrée de l'unité de séparation par membrane, un moyen de comparaison avec une valeur cible, et un moyen d'ajustement de la compression du flux gazeux d'alimentation au sein du compresseur à palettes.
- le compresseur à palettes lubrifiées permet d'augmenter la pression du flux gazeux d'alimentation à une pression entre 6 et 13barg.
- l'unité de séparation par membrane comprend une première sous-unité de séparation par membrane permettant de recevoir le flux gazeux sortant des adsorbeurs et de produire un premier perméat enrichi en dioxyde de carbone et un premier rétentat enrichi en méthane, une seconde sous-unité de séparation par membrane permettant de recevoir le premier rétentat et de produire un second perméat enrichi en dioxyde de carbone et un second rétentat enrichi en méthane, une troisième sous-unité de séparation par membrane permettant de recevoir le premier perméat et de produire un troisième rétentat enrichi en méthane et un troisième perméat enrichi en CO2.

La présente invention a également pour objet un procédé de traitement d'un flux gazeux d'alimentation comprenant au moins du méthane et du dioxyde de carbone pour produire un flux gazeux enrichi en méthane, mettant en œuvre une installation selon l'invention et comprenant :
a) une étape de compression du flux gazeux d'alimentation à une pression comprise entre 6 et 13 barg à l'aide du compresseur à palettes lubrifiées par huile ou par eau,
b) une étape d'élimination et de filtration des impuretés et des vapeurs d'eau ou d'huile,
c) une étape de séparation du dioxyde de carbone et du méthane dans l'unité de séparation par membrane,
d) une étape de mesure de la pression du flux gazeux d'alimentation à l'entrée de l'unité de séparation par membrane,
e) une étape de comparaison de la mesure prise à l'étape c) avec une valeur cible, et
f) en cas d'écart entre la mesure prise et la valeur cible une étape de modification de la compression du flux gazeux d'alimentation au sein du compresseur à palettes.
Selon le cas le procédé selon l'invention peut présenter une ou plusieurs des caractéristiques suivantes :
- les étapes d), e) et f) sont réalisées automatiquement par des moyens de transmission de données et de traitement de données.
- les étapes a) à f) sont réalisées en continu.
- le flux gazeux d'alimentation est du biogaz.

## Revendications

1. Installation pour le traitement d'un flux gazeux d'alimentation comprenant au moins du méthane et du dioxyde de carbone, ladite installation comprenant:
- un compresseur à palettes lubrifiées par huile ou par eau permettant de comprimer le flux gazeux d'alimentation, et
- une unité de séparation par membrane apte à recevoir le flux gazeux comprimé et à séparer le méthane du dioxyde de carbone.

2. Installation selon la revendication 1, **caractérisée en ce qu'**elle comprend :
- au moins un premier moyen de mesure de la pression du flux gazeux d'alimentation à l'entrée de l'unité de séparation par membrane
- un moyen de comparaison avec une valeur cible, et
- un moyen d'ajustement de la compression du flux gazeux d'alimentation au sein du compresseur à palettes.

3. Installation selon l'une des revendications 1 ou 2, **caractérisée en ce que** le compresseur à palettes lubrifiées permet d'augmenter la pression du flux gazeux d'alimentation à une pression entre 6 et 13 barg.

4. Installation selon l'une des revendication 1 à 3, **caractérisée en ce que** l'unité de séparation par membrane comprend :
- une première sous-unité de séparation par membrane permettant de recevoir le flux gazeux sortant des adsorbeurs et de produire un premier perméat enrichi en dioxyde de carbone et un premier rétentat enrichi en méthane,
- une seconde sous-unité de séparation par membrane permettant de recevoir le premier rétentat et de produire un second perméat enrichi en dioxyde de carbone et un second rétentat enrichi en méthane,
- une troisième sous-unité de séparation par membrane permettant de recevoir le premier perméat et de produire un troisième rétentat enrichi en méthane et un troisième perméat enrichi en CO2.

5. Procédé de traitement d'un flux gazeux d'alimentation comprenant au moins du méthane et du dioxyde de carbone pour produire un flux gazeux enrichi en méthane, mettant en œuvre une installation telle que définie dans l'une des revendications 1 à 4 et comprenant :
a) une étape de compression du flux gazeux d'alimentation à une pression comprise entre 6 et 13barg à l'aide du compresseur à palettes lubrifiées par huile ou par eau,
b) une étape d'élimination et de filtration des impuretés et des vapeurs d'eau ou d'huile,
c) une étape de séparation du dioxyde de carbone et du méthane dans l'unité de séparation par membrane,
d) une étape de mesure de la pression du flux gazeux d'alimentation à l'entrée de l'unité de séparation par membrane,
e) une étape de comparaison de la mesure prise à l'étape c) avec une valeur cible, et
f) en cas d'écart entre la mesure prise et la valeur cible une étape de modification de la compression du flux gazeux d'alimentation au sein du compresseur à palettes.

6. Procédé selon la revendication 5, **caractérisé en ce que** les étapes d), e) et f) sont réalisées automatiquement par des moyens de transmission de données et de traitement de données.

7. Procédé selon l'une des revendications 5 ou 6, **caractérisé en ce que** les étapes a) à f) sont réalisées en continu.

8. Procédé selon l'une des revendications 5 à 7, **caractérisé en ce que** le flux gazeux d'alimentation est du biogaz.
